# EUROPEAN PATENT SPECIFICATION

(11) **EP 4 241 124 B1**
(45) Date of publication and mention of the grant of the patent: **29.04.2026**
(21) Application number: 21815766.7
(22) Date of filing: 01.11.2021
(51) Int. Cl.: G02B 6/38

(54) **FIBER OPTIC CONNECTORS HAVING AN INTERNAL RETENTION BODY**
FASEROPTISCHE VERBINDER MIT INTERNEM HALTEKÖRPER
CONNECTEURS DE FIBRES OPTIQUES AYANT UN CORPS DE RETENUE INTERNE

(30) Priority: 05.11.2020 US 202063110098 P
(43) Date of publication of application: 13.09.2023
(73) Proprietor: Corning Research & Development Corporation, Corning, New York 14831 (US)
(72) Inventor: GOMEZ, Michelle Amor, 10961 Berlin (DE); JANASZ, Lukasz Piotr, 91-148 Lodz (PL); KRYGIER, Izabela Janina, 92-009 Lodz (PL); PRZEMYSKA, Magdalena Czeslawa, 93-372 Lodz (PL)
(74) Representative: Sturm, Christoph
(86) International application number: PCT/US2021/057552
(87) International publication number: WO 2022/098600

(56) References cited:
- EP-A1- 3 244 241
- WO-A1-2010/039837
- DE-A1- 3 112 000
- US-A- 4 993 800
- US-A1- 2016 004 016
- US-B2- 10 444 443

## Description

### CROSS-REFERENCE TO RELATED APPLICATIONS

This application claims the benefit of priority of U.S. Provisional Application Serial No. 63/110,098 filed on November 5, 2020.

### FIELD

The disclosure is directed to fiber optic connectors and fiber optic cable assemblies and, more particularly, fiber optic connectors and fiber optic cable assemblies having a retention member for securing the fiber optic connectors to the fiber optic cable assemblies.

### BACKGROUND

Optical fiber is increasingly being used for a variety of applications, including but not limited to broadband voice, video, and data transmission. As bandwidth demands increase optical fiber is migrating deeper into communication networks such as in fiber to the premises applications such as FTTx, 5G and the like. As optical fiber extends deeper into communication networks there exist a need for building more complex and flexible fiber optic networks using fiber optic connectors in a quick and easy manner.

Fiber optic connectors were developed for making plug and play optical connections at links or devices in the communication network such as terminals, cabinets, patch panels, and like. The fiber optic connectors allow the distribution of optical signals within an optical network and provide the flexibility of locating the devices in convenient locations for efficient network design and deployment and also deferring connectivity and the associated expense until needed in the communication network. Certain network operators have a preference for the type of fiber optical cables they deploy in their communication network. Consequently, the fiber optic connectors that terminate many different types of cables advantageously provide manufacturing synergies.

Consequently, there exists an unresolved need for fiber optic connector designs that provide quick and easy manufacturing in a flexible manner.

WO 2010 / 039 837 A1 is directed to a retention body for securing a fiber optic cable thereto for optical connectorization where a fiber optic cable is inserted into a passage of the retention body and secured to the retention body using a bonding agent and/or a mechanical element. The rear end opening of the passage is configured for inserting and securing an end portion of the fiber optic cable therein.

US 10 444 443 B2 is directed to a fiber-optic connector housing and cable attached together using an anchor. The anchor has a one-piece main body with a passage extending between first and second ends of the anchor. Strength members of the cable are secured within the passage by a bonding material and a proximal end of the connector housing includes first and second housing components that capture the anchor.

EP 3 244 241 A1 is directed to an optical fiber connector having a housing with a ferrule installed within the housing along with an end sleeve connected to the rear end of the housing, and an optical cable clamp for securing the optical cable. The optical fiber of the cable is inserted within the housing and butt-joined with the embedded optical fiber within the ferrule.

DE 31 12 000 A1 is directed to a plug-and-socket device for optical fibers having a capillary tube inside a plug pin.

US 2016 / 004 016 A1 f is directed to an optical connector having multiple optical ferrules that each terminates multiple optical fibers and include a fiber take-up arrangement and a flange extending outwardly from a connector housing arrangement.

US 4 993 800 A is directed to a cable fixing mechanism in a connector used in a multicore type optical fiber having a high tensile body in its center.

### SUMMARY

The disclosure is directed to retention bodies, fiber optic connectors, and fiber optic cable assemblies. The embodiments described herein employ a retention body and adhesive to secure a connector housing of a fiber optic connector to a fiber optic cable and thereby fabricate a connectorized fiber optic cable assembly. The retention bodies described herein have one or more openings that are aligned with one or more connector housing apertures to add adhesive that bonds the connector housing the retention body, and the fiber optic cable together. Additionally, the retention bodies include one or more crimp members for crimping the retention body to the fiber optic cable.

The invention provides a fiber optic cable assembly according to claim 1.

Additional features and advantages will be set forth in the detailed description which follows, and in part will be readily apparent to those skilled in the art from that description or recognized by practicing the same as described herein, including the detailed description that follows, the claims, as well as the appended drawings.

It is to be understood that both the foregoing general description and the following detailed description present embodiments that are intended to provide an overview or framework for understanding the nature and character of the claims. The accompanying drawings are included to provide a further understanding of the disclosure, and are incorporated into and constitute a part of this specification. The drawings illustrate various embodiments and together with the description serve to explain the principles and operation.

### BRIEF DESCRIPTION OF THE FIGURES

FIG. 1 is a perspective view of an example fiber optic cable assembly according to one or more embodiments described and illustrated herein;
FIG. 2 is a cross-sectional view of an example dual drop fiber optic cable according to one or more embodiments described and illustrated herein;
FIGS. 3A-3E illustrate an example fiber optic cable having various layers removed according to one or more embodiments described and illustrated herein;
FIGS. 4A-4E illustrate an example retention body according to one or more embodiments described and illustrated herein;
FIG. 5 illustrates a cutaway perspective view of an example fiber optic cable assembly having a retention body that secures a connector housing to a fiber optic cable, wherein the retention body is crimped to a cable jacket of the fiber optic cable, according to one or more embodiments described and illustrated herein;
FIG. 6 illustrates a cutaway perspective view of another example fiber optic cable assembly having a retention body that secures a connector housing to a fiber optic cable, wherein the retention body is crimped to strength members of the fiber optic cable, according to one or more embodiments described and illustrated herein; and
FIG. 7 illustrates an example retention body with a heat shrink element according to one or more embodiments described and illustrated herein.

### DETAILED DESCRIPTION

Reference will now be made in detail to the embodiments of the disclosure, examples of which are illustrated in the accompanying drawings. Whenever possible, like reference numbers will be used to refer to like components or parts.

The concepts disclosed are related to fiber optic connectors, cable assemblies and methods of making comprising a retention body used for securing a fiber optic cable along with a connector housing. During assembly, a portion of the retention body is inserted into the connector housing for aligning an opening of the retention body with at least one connector housing aperture. The retention body may be crimped to either a cable jacket or strength members of a fiber optic cable. The retention body is secured to the connector housing by applying an adhesive through the connector housing aperture and the opening of the retention body. The retention body is configured to prevent the movement of adhesive toward a front end of the connector housing and in a rearward direction by wicking along the fiber optic cable. Moreover, the concepts may be used with single-fiber or multi-fiber connectors and cable assemblies.

Consequently, the fiber optic connector design is highly-adaptable to a wide variety of fiber optic cables of various shapes and/or construction for different customer requirements or preferences. For instance, the connector may be terminated to cables comprising a round cross-section or a non-round cross-section as desired. As described in more detail below, the connectors described herein may be used to terminate dual drop optical cables. Further, the connector may be terminated to cables having rigid strength members such as GRPs or yarn-like strength members such as aramid. In some embodiments, the fiber optic connectors and cable assemblies disclosed may have a conventional connector construction or a connector construction with push-to-lock retention feature in the connector housing as further disclosed.

The concepts disclosed advantageously provide flexibility for the cable type used with the fiber optic connector. The concepts may be used with any suitable cables and may be especially advantageous with compact cable form-factors along with enabling terminals with relatively high-density arrays of optical connections with an organized layout. The connector concepts are scalable to any suitable count of optical fibers on a ferrule in a variety of arrangements or constructions for building fiber optic networks.

The concepts disclosed herein are suitable for fiber optic networks such as for Fiber-to-the-location (FTTx), densification, 5G applications, and are equally applicable to other optical applications as well including indoor, industrial, wireless, or other desired application. Additionally, the concepts disclosed may be used with other devices having any suitable footprint or construction. Various designs, constructions, or features for fiber optic connectors and cable assemblies are disclosed in more detail as discussed herein and may be modified or varied as desired.

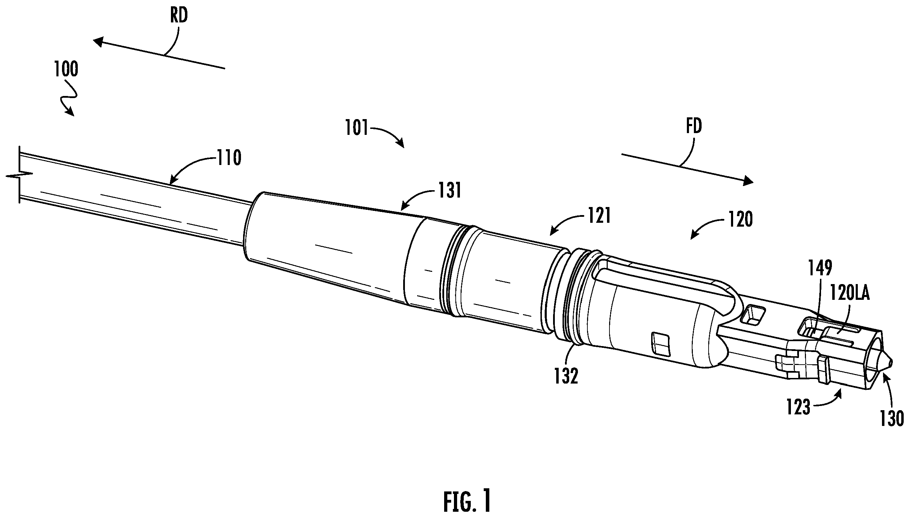

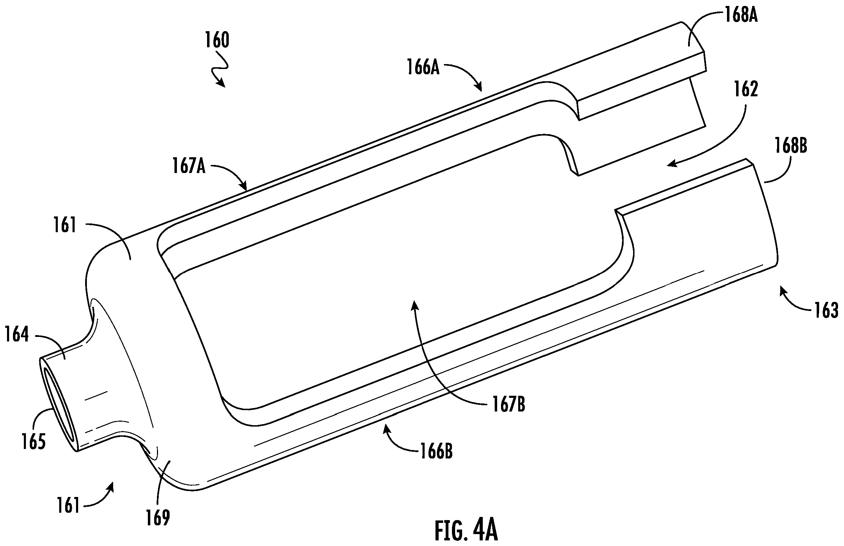

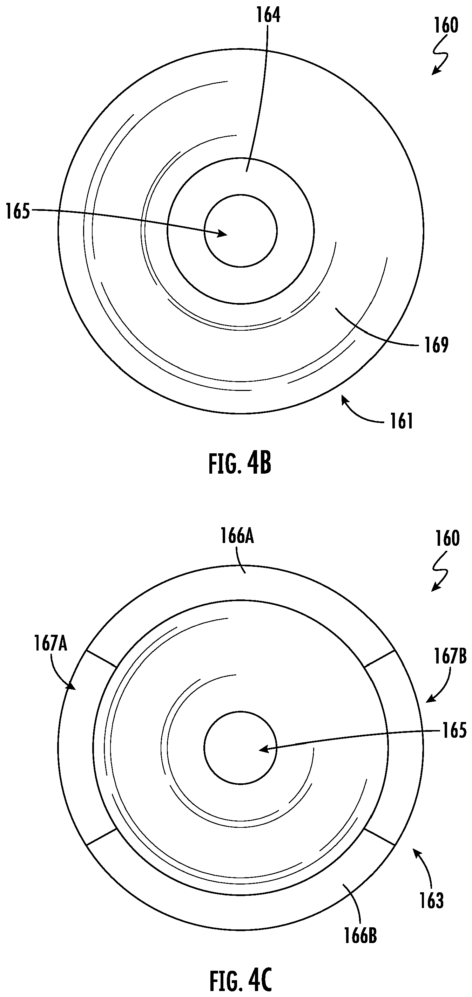

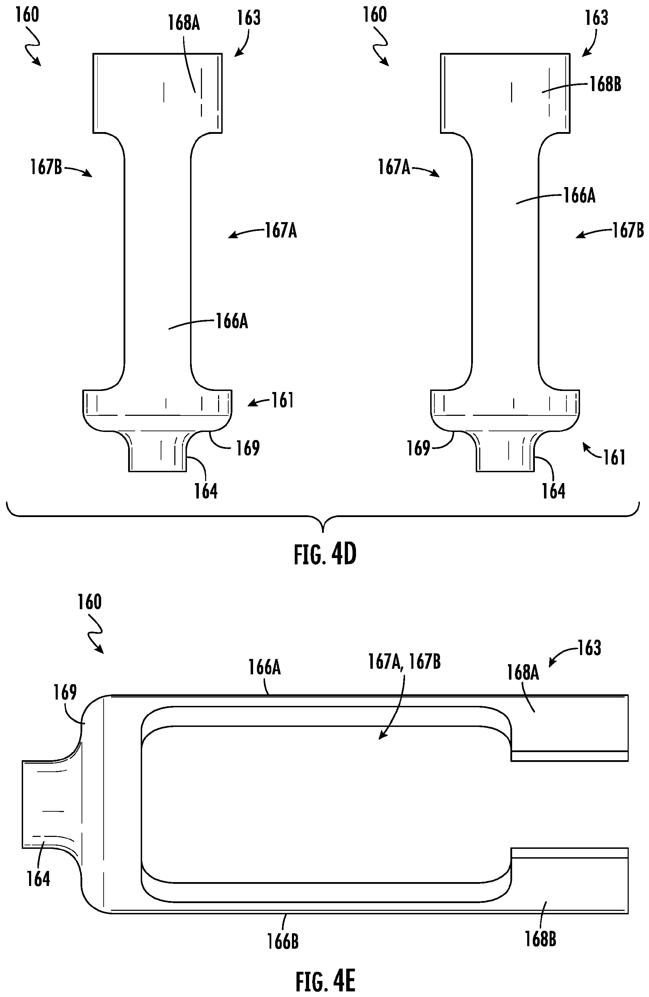

FIG. 1 depicts an example fiber optic cable assembly 100 comprising a connector 101 coupled to an end of a fiber optic cable 110. The connector 101 generally comprises a boot portion 131, a connector housing 120, and an internal retention body 160 (FIGS. 4A-4E, 5, and 6).

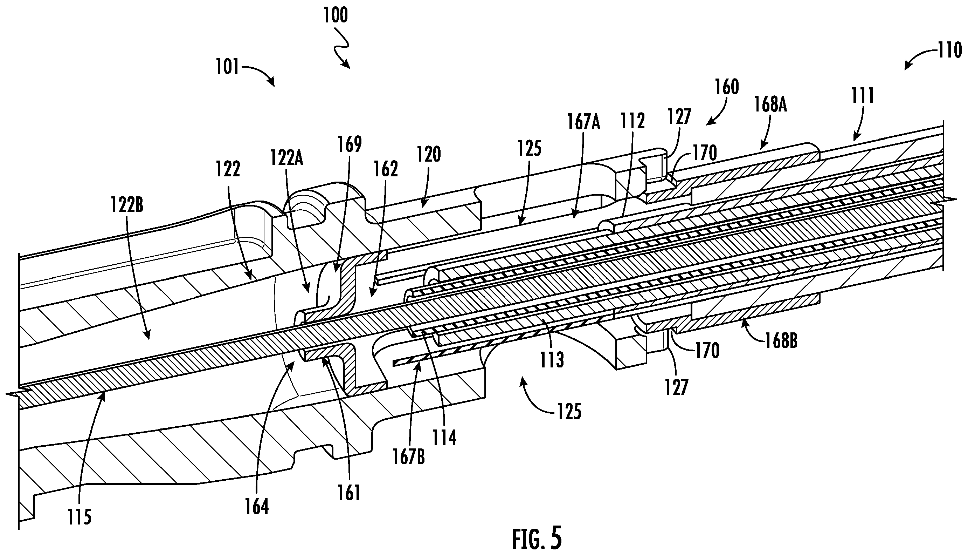

The example connector housing 120 comprises a rear end 121 and a front end 123 with a longitudinal passageway 122 (see FIG. 5) extending from the rear end 121 to the front end 123 with at least one connector housing aperture 125 (see FIG. 5). Connector housing aperture 125 is used for securing the retention body 160 to the connector housing 120 an adhesive, as described in detail below.

Connector housing 120 may have other geometry or features or not as desired. Connector housing 120 may have any suitable outer profile using the concepts disclosed. The explanatory connector housing 120 depicted in FIG. 1 comprises a connector housing with a specific outer profile using primitive geometry with the desired features formed in the primitive geometry (e.g., the round and non-round primitive portions). Examples of explanatory features in the connector housing 20 include locking features for securing the connector 101 in a port, features for keying connector 101, features for securing a dust cap or converting the connector footprint, or other suitable features.

The example connector 101 further includes a ferrule 130 having a fiber bore for receiving an optical fiber. It should be understood that more than one ferrule or more than one fiber bore may be provided for multi-fiber applications. The ferrule 130 of the connector 101 may use a ferrule holder or not. Connector housing 120 may load the ferrule 130 from the rear or the front as desired. By way of explanation, connector housing 120 further comprises one or more latch arms 120LA for securing ferrule holder 149. Latch arms 20LA may be disposed in a front end 123 of connector housing 120 as depicted. Moreover, the front opening of longitudinal passageway 122 of connector housing 120 is sized for allowing the insertion of ferrule holder from the front end 123. Latch arms 20LA are connected at the front end and cantilevered at the rear end so they can be deflected when ferrule holder 149 is inserted and then the latch arms 120LA spring back to retain the ferrule holder 149 once it is fully-inserted.

The boot portion 131 includes a longitudinal passageway (not shown) and is disposed over a portion of the rear end 121 of the connector housing 120. The boot portion 131 may be secured to the connector housing 120 by any means. For example corresponding locking features may be provided to couple the boot portion 131 to the connector housing. in some embodiments, one or more sealing members 132, such as an O-ring, may be provided to seal the longitudinal passageway 122 of the connector housing 120 from the environment.

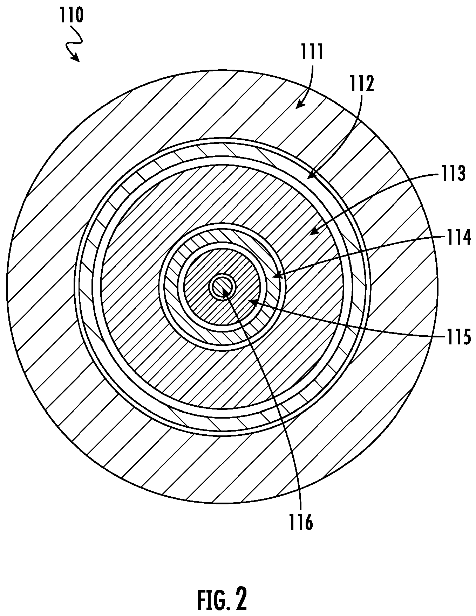

The fiber optic cable 110 may take on any configuration. For example, the fiber optic cable may be a round fiber optic cable or a flat fiber optic cable. In some embodiments, the fiber optic cable 110 is a dual drop fiber optic cable. A non-limiting example of a dual drop fiber optic cable 110 is illustrated in cross-section in FIG. 2. An optical fiber 116 is centrally disposed within the fiber optic cable 110. The optical fiber 116 may include a core and a cladding to guide light by total internal reflection. The core and cladding are not labeled in FIG. 2, but together define the optical fiber 116 and may comprise glass (e.g., germanium-doped silica). One or more coating layers 115 surround the optical fiber 116 to protect the optical fiber 116 from the environment and mechanical loads. In the embodiment shown, a primary coating optical fiber, and a secondary coating surrounds the primary coating. The primary coating may be an acrylic polymer or the like and simply be referred to as "the coating". The secondary coating may comprise polyvinyl chloride (PVC), polyurethane, polyolefin, or the like, and simply be referred to as a "tight buffer" or "tight buffer coating."

Inner strength members 114 are disposed around the one or more coating layers 115 to provide mechanical strength to the fiber optic cable 110. The inner strength members 114 may be any suitable type of material, such as rigid glass-reinforced plastic (GRPs) or flexible yarns such as aramid or fiberglass. Surrounding the inner strength members 114 is a sub-unit 113 that includes an inner jacket. The sub-unit 113 may include an inner jacket material, which may include, but is not limited to, polyvinyl chloride (PVC), polyethylene (PE), a UV curable resin (e.g. acrylate), or a fluoro-compound.

Outer strength members 112 are disposed around the sub-unit 113 to provide additional mechanical strength to the fiber optic cable 110. The inner strength members 114 may be any suitable type of material, such as GRPs or flexible yarns such as aramid or fiberglass. A cable jacket 111 surround the outer strength members 112. Non-limiting materials for the cable jacket 111 include PVC, polyethylene PE, a UV curable resin (e.g. acrylate), or a fluoro-compound.

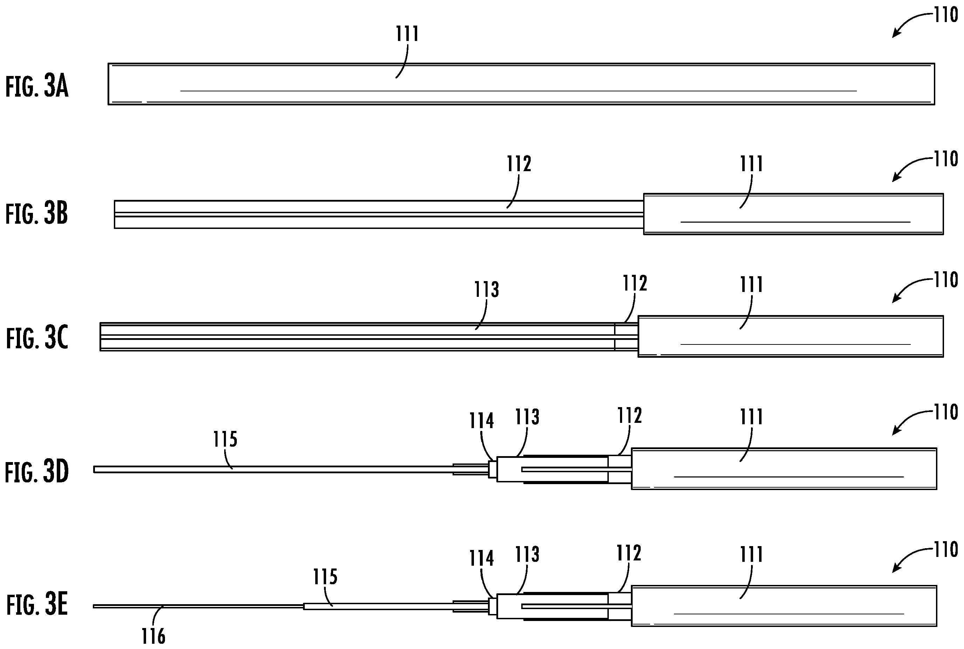

Prior to connectorizing a fiber optic cable 110 with a connector, such as connector 101, the end of the fiber optic cable 110 is prepared by stripping the various layers of the fiber optic cable 110. FIG. 3A illustrates a fiber optic cable 110 prior to any preparation. The cable jacket 111 surrounds all inner layers of the fiber optic cable 110. To connectorized the fiber optic cable 110, first a portion of the cable jacket 111 is stripped away, exposing the outer strength members 112 as shown in FIG. 3B. The stripping of the various layers of the fiber optic cable 110 may be done by any known or yet-to-be-developed tools. Next, as shown in FIG. 3C, a portion of the outer strength members 112 is stripped to expose the sub-unit 113, such as the inner jacket of the sub-unit 113. A portion of the outer strength members 112 remains exposed and may be used to secure the retention body 160 to the fiber optic cable 110 as described in more detail below.

Next a portion of the sub-unit 113 is removed to expose a portion of the inner strength members 114 and the one or more coating layers 115, as shown in FIG. 3D. Finally, the one or more coating layers 115 are stripped to expose a portion of bare optical fiber 116, which will be later inserted into a fiber bore of a ferrule, for example.

To ensure a mechanically rigid and rugged fiber optic cable assembly 100, the connector housing 120 should be rigidly coupled to the fiber optic cable 110. Embodiments of the present disclosure provide rigid mechanical attachment of the connector housing 120 to the fiber optic cable 110 using only one component and adhesive. Particularly, referring to FIGS. 4A-4E and 5, a retention body 160 is configured to be attached to both the fiber optic cable 110 and to the connector housing 120. As shown in FIG. 5, the retention body 160 is disposed between the connector housing 120 and the fiber optic cable 110.

Features of the retention body 160 will now be described with reference to FIGS. 4A-4E. The example retention body 160 includes a front end 161 and a rear end 163, and a longitudinal passageway 162 extending between the front end 161 and the rear end 163. The retention body 160 is made of a material that is capable being deformed and, more specifically, being crimped around a portion of the fiber optic cable 110. For example, the retention body 160 may be fabricated from a metal, such as brass.

The example retention body 160 also includes at least one opening between the front end 161 and the rear end 163. As described in more detail below, the at least one opening provides an opening for adhesive to be applied through the at least one connector housing aperture 125 and the retention body 160. In the illustrated embodiment, and in accordance with the invention,
the retention body 160 includes a first opening 167A and a second opening 167B as the at least one opening. The first opening 167A and the second opening 167B are defined by a first leg 166A and a second leg 166B that extend from the front end 161 of the retention body 160 to the rear end 163.

The shape of the retention body 160 may match the interior shape of the connector housing 120 into which it is designed to be inserted. In the illustrated example, the retention body 160 is circular in cross-section. However, embodiments are not limited thereto.

The example retention body 160 further includes a front wall 169 at the front end 161. The first leg 166A and the second leg 166B extend from the front wall 169 to the rear end 163 of the retention body 160. A fiber guide 164 is configured as a protrusion that extends from the front wall 169. The fiber guide 164 is cylindrical in shape and defines a fiber opening 165 within the fiber guide 164 as well as the front wall 169. The fiber opening 165 is sized and shaped to receive the optical fiber 116. As described in more detail below, the fiber guide 164 not only guides the optical fiber 116, but also provides a crimping zone to crimp the retention body 160 to the optical fiber 116 to prevent adhesive from traveling to the front of the connector housing 120 (i.e., in a forward direction FD as shown in FIG. 1).

The retention body 160 also includes a cable crimp member that is configured to be crimped around one of the outer strength members 112 or the cable jacket 111 to secure the retention body 160 to the fiber optic cable 110. The cable crimp member may take on many configurations. In the illustrated embodiment, the cable crimp member is defined by a first crimp member 168A at a rear portion of the first leg 166A. and a second crimp member 168B at a rear portion of the second leg 166B. As an example, the first and second crimp members 168A, 168B are configured as tabs that have a greater width than the first and second legs 166A 166B to provide enlarged surface area for crimping against the fiber optic cable 110 by a crimping tool.

Referring now to FIG. 5, a cutaway view of an example fiber optic cable assembly 100 comprising a connector housing 120, a retention body 160 and a fiber optic cable 110 is provided. The connector housing 120 and the retention body 160 at least partially define a connector 101. Various layers of the fiber optic cable 110 are stripped away as described above with reference to FIGS. 3A-3E. The retention body 160 is disposed on the fiber optic cable 110 such that the fiber optic cable is positioned in the longitudinal passageway 162 of the retention member, and a portion of the fiber optic cable 110 having the one or more coating layers 115 is positioned through the fiber opening 165 defined by the fiber guide 164. In the illustrated embodiment, the retention body 160 is positioned such that the first crimp member 168A and the second crimp member 168B are adjacent to the cable jacket 111 of the fiber optic cable 110. The first crimp member 168A and the second crimp member 168B are pressed against the cable jacket 111 to crimp both crimp members to the cable jacket 111 (e.g., using a crimping tool). In some embodiments, the fiber guide 164 is pressed inwardly to crimp the fiber guide 164 to the one or more coating layers 115 to minimize any gap between the retention body 160 and the one or more coating layers 115 and prevent adhesive from flowing out of the retention body 160 toward the front end of the connector housing 120.

The retention body 160 and the fiber optic cable 110 are inserted into the longitudinal passageway 122 of the connector housing 120. In the illustrated example, the longitudinal passageway 122 includes a tapered section 122B and a rear, non-tapered section 122A. The retention body 160 is disposed within the rear, non-tapered section 122A. The example retention body 160 includes a connector engagement surface 170 at the rear end 163 that is configured to contact a rear end face 127 of the connector housing 120 to provide a stop for the retention body 160. Thus, the connector engagement surface 170 and the rear end face 127 cooperate to prevent the retention body 160 from being inserted too far into the longitudinal passageway 122 of the connector housing 120. In the illustrated embodiment, the connector engagement surface 170 is a shoulder such that a rear opening of the retention body 160 is larger in diameter than a diameter at the mid-section of the retention body 160.

The retention body 160 is inserted into the connector housing 120 such that the at least one opening of the retention body 160 (e.g., the first opening 167A and the second opening 167B) is aligned with the at least one connector housing aperture 125. Thus, the first opening 167A, the second opening 167B and the connector housing apertures 125 provide access to the fiber optic cable 110 and, more particularly, to the one or more coating layers 115, the inner strength members 114, the sub-unit 113, and the outer strength members 112.

To secure the retention body 160 to the connector housing 120, as well as further secure the retention body 160 to the fiber optic cable 110, adhesive is disposed within the at least one opening of the retention body 160 (e.g., the first opening 167A and the second opening 167B) at the at least one connector housing aperture 125. Any suitable adhesive may be utilized. The adhesive flows within the longitudinal passageway 162 of the retention body 160, over the various layers of the fiber optic cable 110, and the inner surfaces of the rear, non-tapered section 122A of the longitudinal passageway 122 of the connector housing 120. The first opening 167A and the second opening 167B are larger than the connector housing apertures 125 so that the interior of the rear, non-tapered section 122A of the longitudinal passageway 122 is exposed, thereby providing surface area of the connector housing 120 for the adhesive to bond to.

The front wall 169 of the retention body 160 prevents the adhesive from flowing toward the front end of the connector housing 120 and thus into the tapered section 122B of the longitudinal passageway 122. Additionally, as stated above, the fiber guide 164 may be crimped onto the one or more coating layers 115 of the fiber optic cable 110 to further minimize adhesive flow into the tapered section 122B. The connector engagement surface 170 also prevent adhesive from wicking into the fiber optic cable 110 in the rearward direction RD (FIG. 1).

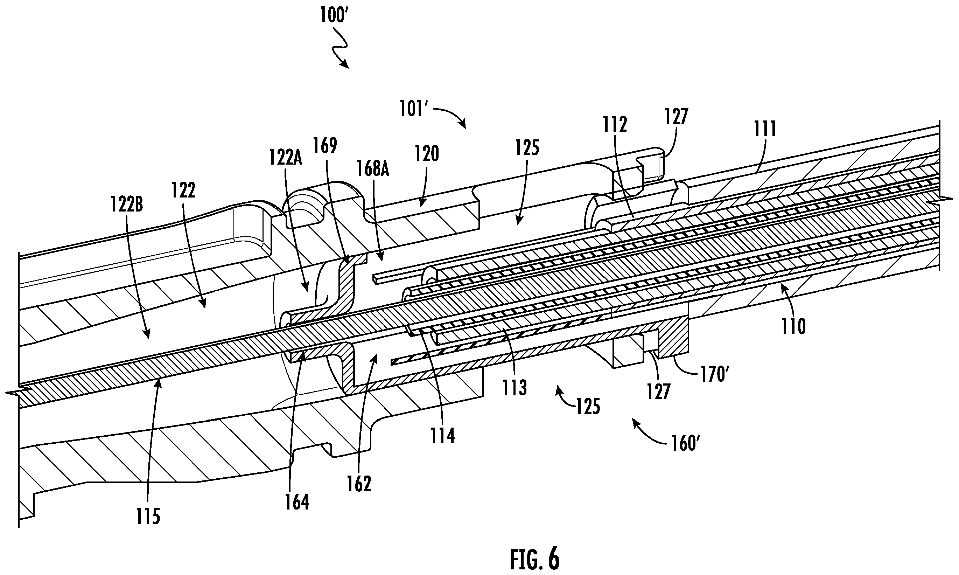

FIG. 6 illustrates another example fiber optic cable assembly 100' The example fiber optic cable assembly 100' of FIG. 6 comprises a fiber optic cable 110 and a connector 101'. The example connector 101' comprises a connector housing 120' and a retention body 160'. The example retention body 160' of FIG. 6 is similar to the example retention body 160 shown in FIG. 5 except it is crimped to the outer strength members 112 rather than the cable jacket 111. The retention body 160' may be crimped to the outer strength members 112 using a crimping tool, for example.

The example retention body 160' includes at least one connector housing engagement feature 170' configured as a tab extends radially outward and that presses against a rear end face 127' of the connector housing 120'. The rear end of the connector housing 120' may include a notch 129 in some embodiments that is configured to seat the at least one connector housing engagement feature 170'. In other embodiments, not notch 129 is provided. The at least one connector housing engagement features 170' and the rear end face 127 of the connector housing 120' cooperate to properly seat the retention body 160' in the longitudinal passageway 122 of the connector housing 120'.

An adhesive may be applied in the manner describe with respect to FIG. 5 to secure the connector housing 120', the retention body 160', and the fiber optic cable 110.

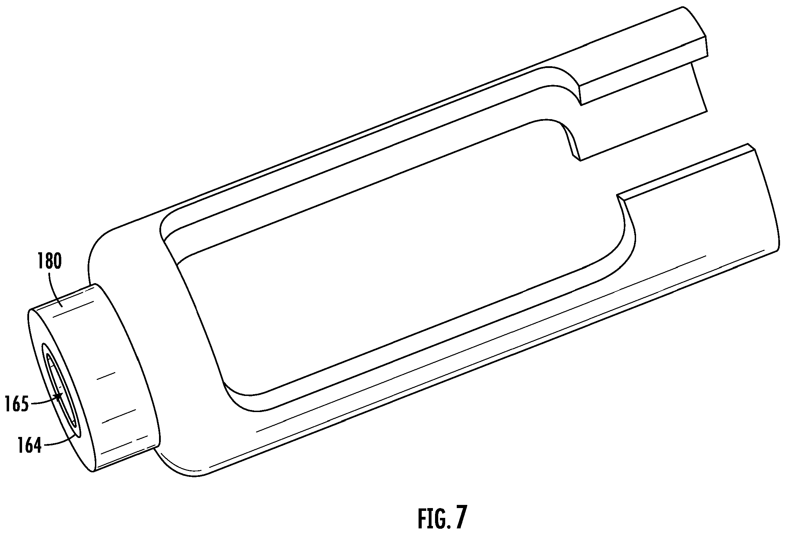

In some embodiments, the adhesive may be further prevented from flowing toward the front end of the connector housing by the use of a heat shrink element. FIG. 7 illustrates the example retention body 160 of FIGS. 4A-4E with a heat shrink element 180 disposed on the front wall 169 and around the fiber guide 164. The heat shrink element 180 may be applied to the retention body 160 by application of heat to shrink the heat shrink element 180 about the fiber guide 164. The size of the heat shrink element 180 after applying the heat may be such that the heat shrink element 180 is compressed within the longitudinal passageway 122 of the connector housing 120, thereby sealing the longitudinal passageway 162 of the retention body 160 from the front end of the connector housing 120 (e.g., the tapered section 122B of the longitudinal passageway 122), thereby preventing the flow of adhesive.

It should now be understood that embodiments of the present disclosure are directed to retention bodies that secure a fiber optic cable to a connector housing using adhesive. The retention bodies described herein reduce the overall number of components to secure the fiber optic cable to the connector housing, thereby saving costs associated with manufacturing and inventorying components, as well as assembling the fiber optic cable assemblies. The retention bodies disclosed herein may also include a fiber guide that prevents adhesive from flowing in a forward direction, as well as a connector housing engagement feature that prevents adhesive from wicking in a rearward direction. Further, the retention bodies described herein include one or more crimp members for crimping the retention body to the fiber optic cable.

Although the disclosure has been illustrated and described herein with reference to explanatory embodiments and specific examples thereof, it will be readily apparent to those of ordinary skill in the art that other embodiments and examples can perform similar functions and/or achieve like results. All such embodiments and examples are within the scope of the appended claims. It will also be apparent to those skilled in the art that various modifications and variations can be made to the concepts disclosed without departing from the scope of the same. Thus, it is intended that the present application cover the modifications and variations provided they come within the scope of the appended claims.

## Claims

1. A fiber optic cable assembly (100, 100') comprising:
a fiber optic cable (110) comprising an optical fiber (116), strength members (112) and a cable jacket (111); and
a connector housing (120) comprising a rear end (121) and a front end (123) with a longitudinal passageway (122) extending from the rear end (121) to the front end (123); and
a retention body (160) comprising:
a front end (161) and a rear end (163);
a longitudinal passageway (162) extending between the front end (161) and the rear end (163);
at least one opening (167A,167B) between the front end (161) and the rear end (163), wherein the at least one opening (167A,167B) comprises a first opening (167A) and a second opening (167B) extending from the front end wall (169) through the rear end (163);
a first leg (168A) and a second leg (168B) that define the first opening (167A) and the second opening (167B);
a front end wall (169) at the front end (161);
a fiber guide (164) extending from the front end wall (169), wherein the fiber guide (164) defines a fiber opening (165) in the front end wall (169) for receiving the optical fiber (116) of the fiber optic cable (110); and
a connector engagement surface (170) at the rear end (163);
wherein:
the connector engagement surface (170) contacts the rear end (121) of the connector housing (120);
the fiber optic cable (110) is secured within the longitudinal passageway (162) of the retention body (160) by an adhesive;
the rear end (163) of the retention body (160) is crimped to one of the strength members (112) and the cable jacket (111).

2. The fiber optic cable assembly of claim 1, wherein the first leg (166A) comprises a first crimp member (168A) at the rear end and the second leg (166B) comprises a second crimp member (168B) at the rear end, and the first and second crimp members (168A,168B) crimp the retention body (160) to one of the strength members (112) and the cable jacket (111).

3. The fiber optic cable assembly of claim 1 or 2, wherein the rear end (163) comprises a cable crimp member.

4. The fiber optic cable assembly of any one of claims 1-3, wherein the connector engagement surface (170) comprises a shoulder.

5. The fiber optic cable assembly of any one of claims 1-4, wherein the connector engagement surface (170) comprises a tab that extends radially outward.

6. The fiber optic cable assembly of any one of claims 1-5, wherein the fiber guide (164) is configured to be crimped onto the optical fiber (116).

7. The fiber optic cable assembly of any one of claims 1-6, wherein the retention body (160) is cylindrical.

8. The fiber optic cable assembly of any one of claims 1-7, further comprising a heat shrink element (180) disposed around the optical fiber (116) and the fiber guide (164) and within the longitudinal passageway (122) of the connector housing (120).

9. The fiber optic cable assembly of any one of claims 1-8, wherein the front end wall (169) of the retention body (160) prevents the adhesive from traveling forward of the retention body (160) in a longitudinal direction.

10. The fiber optic cable assembly of any one of claims 1-9, wherein contact between the connector engagement surface (170) of the retention body (160) and the rear end (121) of the connector housing (120) prevents the adhesive from wicking in the fiber optic cable (110) in a rearward longitudinal direction.

11. The fiber optic cable assembly of any one of claims 1-10, wherein the connector housing (120) comprises at least one connector housing aperture (125) aligned with the at least one opening of the retention body (160).

## Patentansprüche

1. Faseroptische Kabelanordnung (100, 100'), die Folgendes aufweist:
ein faseroptisches Kabel (110), das eine Lichtleiterfaser (116), Festigkeitselemente (112) und einem Kabelmantel (111) aufweist; und
ein Verbindergehäuse (120), das ein hinteres Ende (121) und ein vorderes Ende (123) mit einem Längsdurchgang (122) aufweist, der sich von dem hinteren Ende (121) zu dem vorderen Ende (123) erstreckt; und
einen Haltekörper (160), der Folgendes aufweist:
ein vorderes Ende (161) und ein hinteres Ende (163);
einen Längsdurchgang (162), der sich zwischen dem hinteren Ende (161) und dem vorderen Ende (163) erstreckt;
mindestens eine Öffnung (167A, 167B) zwischen dem vorderen Ende (161) und dem hinteren Ende (163), wobei die mindestens eine Öffnung (167A, 167B) eine erste Öffnung (167A) und eine zweite Öffnung (167B) aufweist, die sich von der vorderen Endwand (169) durch das hintere Ende (163) erstrecken;
einen ersten Schenkel (168A) und einen zweiten Schenkel (168B), die die erste Öffnung (167A) und die zweite Öffnung (167B) definieren;
eine vordere Endwand (169) an dem vorderen Ende (161);
eine Faserführung (164), die sich von der vorderen Endwand (169) erstreckt, wobei die Faserführung (164) eine Faseröffnung (165) in der vorderen Endwand (169) zum Aufnehmen der Lichtleiterfaser (116) des faseroptischen Kabels (110) definiert; und
eine Verbindereingriffsfläche (170) an dem hinteren Ende (163);
wobei:
die Verbindereingriffsfläche (170) mit dem hinteren Ende (121) des Verbindergehäuses (120) in Kontakt steht;
das faseroptische Kabel (110) in dem Längsdurchgang (162) des Haltekörpers (160) durch einen Klebstoff befestigt ist;
das hintere Ende (163) des Haltekörpers (160) an eines der Festigkeitselemente (112) und den Kabelmantel (111) gecrimpt ist.

2. Faseroptische Kabelanordnung nach Anspruch 1, wobei der erste Schenkel (166A) ein erstes Crimpelement (168A) an dem hinteren Ende aufweist und der zweite Schenkel (166B) ein zweites Crimpelement (168B) an dem hinteren Ende aufweist, und wobei das erste und das zweite Crimpelement (168A, 168B) den Haltekörper (160) an eines der Festigkeitselemente (112) und den Kabelmantel (111) crimpen.

3. Faseroptische Kabelanordnung nach Anspruch 1 oder 2, wobei das hintere Ende (163) ein Kabelcrimpelement aufweist.

4. Faseroptische Kabelanordnung nach einem der Ansprüche 1-3, wobei die Verbindereingriffsfläche (170) eine Schulter aufweist.

5. Faseroptische Kabelanordnung nach einem der Ansprüche 1-4, wobei die Verbindereingriffsfläche (170) eine Lasche aufweist, die sich radial nach außen erstreckt.

6. Faseroptische Kabelanordnung nach einem der Ansprüche 1-5, wobei die Faserführung (164) dazu ausgelegt ist, auf die Lichtleiterfaser (116) gecrimpt zu sein.

7. Faseroptische Kabelanordnung nach einem der Ansprüche 1-6, wobei der Haltekörper (160) zylindrisch ist.

8. Faseroptische Kabelanordnung nach einem der Ansprüche 1-7, die ferner ein Wärmeschrumpfelement (180) aufweist, das um die Lichtleiterfaser (116) und die Faserführung (164) herum und in dem Längsdurchgang (122) des Verbindergehäuses (120) angeordnet ist.

9. Faseroptische Kabelanordnung nach einem der Ansprüche 1-8, wobei die vordere Endwand (169) des Haltekörpers (160) verhindert, dass sich der Klebstoff in Längsrichtung vor den Haltekörper (160) bewegt.

10. Faseroptische Kabelanordnung nach einem der Ansprüche 1-9, wobei ein Kontakt zwischen der Verbindereingriffsfläche (170) des Haltekörpers (160) und dem hinteren Ende (121) des Verbindergehäuses (120) verhindert, dass der Klebstoff in dem faseroptischen Kabel (110) in Längsrichtung nach hinten transportiert wird.

11. Faseroptische Kabelanordnung nach einem der Ansprüche 1-10, wobei das Verbindergehäuse (120) mindestens einen Verbindergehäusedurchlass (125) aufweist, der mit der mindestens einer Öffnung des Haltekörpers (160) ausgerichtet ist.

## Revendications

1. Ensemble à câble à fibre optique (100, 100'), comprenant :
un câble à fibre optique (110) comprenant une fibre optique (116), des organes de renfort (112), et une gaine de câble (111) ; et
un logement de connecteur (120) comprenant une extrémité arrière (121) et une extrémité avant (123) avec une voie de passage longitudinale (122) s'étendant depuis l'extrémité arrière (121) jusqu'à l'extrémité avant (123) ; et
un corps de retenue (160) comprenant :
une extrémité avant (161) et une extrémité arrière (163) ;
une voie de passage longitudinale (162) s'étendant entre l'extrémité avant (161) et l'extrémité arrière (163) ;
au moins une ouverture (167A, 167B) entre l'extrémité avant (161) et l'extrémité arrière (163), dans lequel l'au moins une ouverture (167A, 167B) comprend une première ouverture (167A) et une seconde ouverture (167B) s'étendant depuis la paroi d'extrémité avant (169) à travers l'extrémité arrière (163) ;
un premier segment (168A) et un second segment (168B) qui définissent la première ouverture (167A) et la seconde ouverture (167B) ;
une paroi d'extrémité avant (169) à l'extrémité avant (161) ;
un guide de fibre (164) s'étendant depuis la paroi d'extrémité avant (169), dans lequel le guide de fibre (164) définit une ouverture de fibre (165) dans la paroi d'extrémité avant (169) destinée à recevoir la fibre optique (116) du câble à fibre optique (110) ; et
une surface d'entrée en prise avec connecteur (170) à l'extrémité arrière (163) ;
dans lequel :
la surface d'entrée en prise avec connecteur (170) entre en contact avec l'extrémité arrière (121) du logement de connecteur (120) ;
le câble à fibre optique (110) est fixé à l'intérieur de la voie de passage longitudinale (162) du corps de retenue (160) par un adhésif ;
l'extrémité arrière (163) du corps de retenue (160) est sertie sur un des organes de renfort (112) et la gaine de câble (111).

2. Ensemble à câble à fibre optique de la revendication 1, dans lequel le premier segment (166A) comprend un premier organe de sertissage (168A) à l'extrémité arrière et le second segment (166B) comprend un second organe de sertissage (168B) à l'extrémité arrière, et les premier et second organes de sertissage (168A, 168B) sertissent le corps de retenue (160) sur un des organes de renfort (112) et la gaine de câble (111).

3. Ensemble à câble à fibre optique de la revendication 1 ou 2, dans lequel l'extrémité arrière (163) comprend un organe de sertissage de câble.

4. Ensemble à câble à fibre optique de l'une quelconque des revendications 1 à 3, dans lequel la surface d'entrée en prise avec connecteur (170) comprend un épaulement.

5. Ensemble à câble à fibre optique de l'une quelconque des revendications 1 à 4, dans lequel la surface d'entrée en prise avec connecteur (170) comprend une patte qui s'étend radialement vers l'extérieur.

6. Ensemble à câble à fibre optique de l'une quelconque des revendications 1 à 5, dans lequel le guide de fibre (164) est configuré pour être serti sur la fibre optique (116).

7. Ensemble à câble à fibre optique de l'une quelconque des revendications 1 à 6, dans lequel le corps de retenue (160) est cylindrique.

8. Ensemble à câble à fibre optique de l'une quelconque des revendications 1 à 7, comprenant en outre un élément thermorétrécissable (180) disposé autour de la fibre optique (116) et du guide de fibre (164) et à l'intérieur de la voie de passage longitudinale (122) du logement de connecteur (120).

9. Ensemble à câble à fibre optique de l'une quelconque des revendications 1 à 8, dans lequel la paroi d'extrémité avant (169) du corps de retenue (160) empêche l'adhésif de se déplacer vers l'avant du corps de retenue (160) dans une direction longitudinale.

10. Ensemble à câble à fibre optique de l'une quelconque des revendications 1 à 9, dans lequel un contact entre la surface d'entrée en prise avec connecteur (170) du corps de retenue (160) et l'extrémité arrière (121) du logement de connecteur (120) empêche l'adhésif d'effectuer un effet mèche dans le câble à fibre optique (110) dans une direction longitudinale vers l'arrière.

11. Ensemble à câble à fibre optique de l'une quelconque des revendications 1 à 10, dans lequel le logement de connecteur (120) comprend au moins un orifice de logement de connecteur (125) aligné avec l'au moins un ouverture du corps de retenue (160).
